# EUROPEAN PATENT SPECIFICATION

(11) **EP 3 208 704 B1**
(45) Date of publication and mention of the grant of the patent: **06.01.2021**
(21) Application number: 15874967.1
(22) Date of filing: 05.11.2015
(51) Int. Cl.: G06F 3/0488, G06F 3/0489, G06F 9/451

(54) **APPLICATION CONTROL METHOD AND DEVICE**
ANWENDUNGSSTEUERUNGSVERFAHREN UND -VORRICHTUNG
PROCÉDÉ ET DISPOSITIF DE COMMANDE D'APPLICATIONS

(30) Priority: 31.12.2014 CN 201410856869
(43) Date of publication of application: 23.08.2017
(73) Proprietor: Xiaomi Inc., Beijing 100085 (CN)
(72) Inventor: GAO, Sitai, Beijing 100085 (CN); SHEN, Wenxing, Beijing 100085 (CN)
(74) Representative: Cabinet Beau de Loménie
(86) International application number: PCT/CN2015/093862
(87) International publication number: WO 2016/107283

(56) References cited:
- EP-A1- 2 637 128
- CN-A- 101 482 796
- CN-A- 102 270 080
- CN-A- 102 929 424
- CN-A- 103 558 990
- CN-A- 104 461 304
- US-A1- 2007 129 050
- US-A1- 2010 156 815
- US-A1- 2013 080 891
- US-A1- 2013 139 113

## Description

### TECHNICAL FIELD

The present disclosure generally relates to the field of communication and computer processing, and more particularly, to a method and a device for controlling an application.

### BACKGROUND

With the development of electronic technologies, mobile terminals have become increasingly prevalent across the world, and are updated very fast. Mobile terminals have evolved from the original physical keyboard input to touch screen input, and full touch screen mobile terminals have become a main stream. Document US2010156815 discloses a method for searching and entering alphanumeric data in a stored list.

Document US2013139113 discloses a method for creating and using a shortcut that groups actions to perform a task on a computer device and a mobile computing device e.g. smartphone.

### SUMMARY

The invention is recited in the independent claims. Further advantageous embodiments are recited in the dependent claims.

According to a first aspect of embodiments of the present disclosure, there is provided a method according to claim 1.

The technical solutions provided by embodiments of the present disclosure may have the following advantageous effects:
In the embodiments, a correspondence between physical keys and application operations are pre-configured, and then an application is controlled by performing an application operation, and familiarity with interfaces of the application and calling of interfaces of the application are not needed. By updating the correspondence, extension and compatibility with newly added applications are realized. Applications are controlled by physical keys, and thus a user may have a tactile feedback by the physical keys, and the tactile feedback may make the user clearly know whether the corresponding operation is successful. When it is not convenient for a user to view the screen or it is not convenient for a user to operate on a touch screen, the embodiments of the present disclosure have better effects.

In the embodiments, a button on an interface is identified, familiarity with internal interfaces of applications is not needed, and applications may be controlled only with knowledge of the contents of the application interface. The control procedure is simple and convenient and is convenient for extension and compatibility with newly added applications.

In an embodiment, the step of identifying the virtual button on a current application interface, includes:
obtaining the current interface of the current application; and
by identifying a character or a pattern of the virtual button on the current interface, identifying the virtual button.

The technical solutions provided by embodiments of the present disclosure may have the following advantageous effects:
In the embodiments, by identifying manners such as interface identification or image identification, a button on an interface is identified, and then a gesture operation on the button may be more accurately performed.

In an embodiment, the step of determining an application operation corresponding to the triggering operation on the physical key under a current application, includes:
determining an application operation corresponding to the triggering operation on the physical key under a current interface of the current application.

The technical solutions provided by embodiments of the present disclosure may have the following advantageous effects:
In the embodiments, for different interfaces of one application, one physical key may correspond to different application operations, and thus one triggering operation on a physical key may perform a plurality of application operations for the application. Consequently, applications may be controlled more conveniently and flexibly.

In an embodiment, the step of determining an application operation corresponding to the triggering operation on the physical key under a current application, includes:
according to a most frequently used application operation in history recordings of application operations under the current application, determining the application operation corresponding to the triggering operation on the physical key under the current application.

The technical solutions provided by embodiments of the present disclosure may have the following advantageous effects:
In the embodiments, the application operation corresponding to the triggering operation on the physical key is determined according to user's history of behaviors and customs. The application operation determined by such manner is more consistent with user's needs and user's operation is more accurate and convenient.

In an embodiment, one triggering operation on the physical key corresponds to a plurality of application operations; or
triggering operations on a plurality of physical keys correspond to one application operation.

The technical solutions provided by embodiments of the present disclosure may have the following advantageous effects:
In the embodiments, the correspondence between triggering operations on physical keys and application operations may be configured flexibly and may adapt to various applications.

According to a second aspect of embodiments of the present disclosure, there is provided a device for controlling an application according to claim 6.

In an embodiment, the interface submodule obtains the current interface of the current application and, by identifying a character or a pattern of the virtual button on the current interface, identifies the virtual button.

In an embodiment, the determining module includes:
a first determining submodule configured to determine an application operation corresponding to the triggering operation on the physical key under a current interface of the current application.

In an embodiment, the determining module includes:
a second determining submodule configured to, according to a most frequently used application operation in history recordings of application operations under the current application, determine the application operation corresponding to the triggering operation on the physical key under the current application.

In an embodiment, one triggering operation on the physical key corresponds to a plurality of application operations; or
triggering operations on a plurality of physical keys correspond to one application operation.

According to a further aspect of embodiments of the present disclosure, there is provided a program product according to claim 11.

According to a further aspect of embodiments of the present disclosure, there is provided a computer program according to claim 12.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for controlling an application according to an exemplary embodiment.
Fig. 2 is a diagram showing an application interface according to an exemplary embodiment.
Fig. 3 is a diagram showing an application interface according to an exemplary embodiment.
Fig. 4 is a diagram showing an application interface according to an exemplary embodiment.
Fig. 5 is a diagram showing an application interface according to an exemplary embodiment.
Fig. 6 is a diagram showing an application interface according to an exemplary embodiment.
Fig. 7 is a diagram showing a configuration interface according to an exemplary embodiment.
Fig. 8 is a flowchart showing a method for controlling an application according to an exemplary embodiment.
Fig. 9 is a flowchart showing a method for controlling an application according to an exemplary embodiment.
Fig. 10 is a block diagram showing a device for controlling an application according to an exemplary embodiment.
Fig. 11 is a block diagram showing a determining module according to an exemplary embodiment.
Fig. 12 is a block diagram showing an executing module according to an exemplary embodiment.
Fig. 13A is a block diagram showing a determining module according to an exemplary embodiment.
Fig. 13B is a block diagram showing a determining module according to an exemplary embodiment.
Fig. 14 is a block diagram showing a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

In related arts, most mobile terminals are not provided with hardware keyboards but employ a full touch screen input. A mobile terminal with full touch screen input usually has a small number of physical keys (or hardware keys) such as an on/off key and a volume key.

The inventors of the present disclosure have found that physical keys may provide tactile feedbacks for users. A user may know whether an operation is successful or failed by the tactility of pressing a physical key even without viewing the screen. When it is not convenient for a user to view a screen or when it is not convenient for a user to perform operations on the screen, a physical key may make user's operations easier. Thus, it is desired to have physical keys to incorporate more functionalities without being limited to turning on/off a mobile terminal and adjusting volume.

A possible solution is to negotiate with the operator of an application in advance to request the operator to open internal interfaces of the application. Then, a developer may become familiar with internal interfaces of each application and make the interfaces of each application adapt to physical keys. In practical operations, when a user presses a physical key, a mobile terminal calls the interfaces which adapt to the physical key and thereby controls the application via the physical key.

In embodiments of the present disclosure, a solution without need of familiarity with and calling of internal interfaces of applications is proposed. When a physical key is triggered, the interface of the application is operated and thereby the application is controlled. Thus, the tactile advantage of physical keys is applied in controlling of applications on a full touch screen. Consequently, a user may more accurately know operation results. Further, a method for controlling an application is provided herein.

The physical keys in the embodiments of the present disclosure include a home key, an on/off key, a volume key and an additional control key and the like.

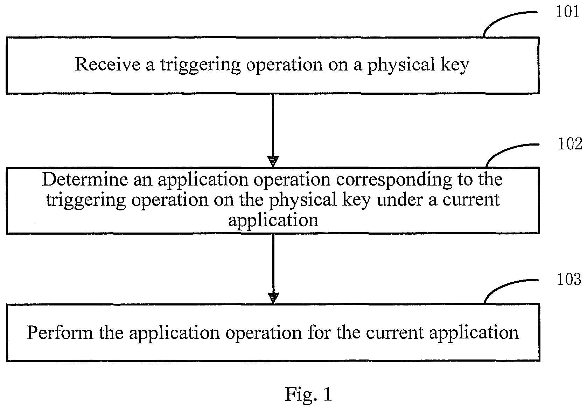

Fig. 1 is a flowchart showing a method for controlling an application according to an exemplary embodiment. As shown in Fig. 1, the method is implemented by a mobile terminal and may include the following steps.

In step 101, a triggering operation on a physical key is received.

In step 102, an application operation corresponding to the triggering operation on the physical key is determined under a current application.

In step 103, the application operation is performed for the current application.

In the embodiment, a user may start a certain application and then press a physical key under this application. The mobile terminal receives a triggering operation on the physical key under the application, for example, a single pressing, a double pressing or a long pressing and the like. Different from pressing a physical key under a desktop screen by a user, when the triggering operation on the physical key is received after entering into the application interface, the mobile terminal may perform corresponding application operations under the application according to pre-configured triggering operation on the physical key so as to control the application. For different applications, different controls may be realized by pressing a physical key. If the triggering operation on the physical key is received under a desktop screen, the mobile terminal can only control a particular single application. Further, the control of application in the present embodiment is realized by performing application operations, and the operator of the application does not need to open internal interfaces, and professionals do not need to be familiar with the internal interfaces of the application. Thus, compatibility and extendibility of the embodiment are better, and only the correspondence between triggering operations on physical keys and application operations of applications need to be updated.

In an embodiment, the application operation includes a gesture operation and an object of the gesture operation.

The application includes a gesture operation on a virtual button. In further aspects not covered by the claims, the application operation may be various operations, including a gesture operation on an interface, for example. For a gesture operation on an interface, the interface is the object of the gesture operation. For a gesture operation on a virtual button, the virtual button is the object of the gesture operation.

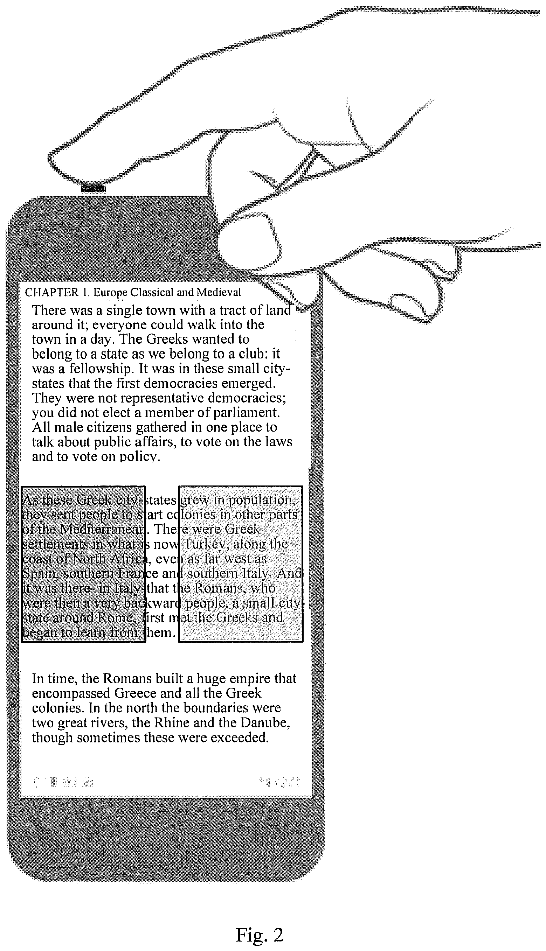

For example, the application is a reader and the triggering operation on a physical key includes a single pressing and a double pressing. The single pressing corresponds to a gesture operation of sliding to the left or a single tap on the left, and the control on the application is turning to a previous page. The double pressing corresponds to a gesture operation of sliding to the right or a single tap on the right, and the control on the application is turning to a next page. Under the reader application, every pressing (a single pressing) on the physical key by the user makes the mobile terminal triggered by the single pressing, and the mobile terminal determines that the triggering operation of the single pressing corresponds to a single tap on the left area in the reader, as shown in Fig. 2. Then, the mobile terminal performs a single tap gesture operation on the left area, equivalent to generating a gesture instruction representing a single tap on the left area, and then sends the gesture instruction to the reader. After receiving the gesture instruction, the reader performs processing of turning to a previous page. Or, if the user performs two consecutive pressing (double pressing) on the physical key, the mobile terminal is triggered by the double pressing, and determines that the triggering operation of the double pressing corresponds to a single tap on the right area in the reader, as shown in Fig. 2. Then, the mobile terminal performs a single tap gesture operation on the right area, equivalent to generating a gesture instruction representing a single tap on the right area, and then sends the gesture instruction to the reader. After receiving the gesture instruction, the reader performs processing of turning to a next page.

Under different application interfaces, the triggering operation on a physical key may correspond to different gesture operations. Thus, it is convenient to flexibly control applications.

When the application operation includes a gesture operation on a virtual button, step 102 is realized by steps A1 and A2, and step 103 is realized by step A3.

In step A1, a virtual button and a gesture operation corresponding to the triggering operation on the physical key under the current application are determined.

In step A2, the virtual button is identified on a current interface and coordinates of the virtual button on the current interface are determined.

In step A3, the gesture operation is performed at the coordinates for the current application.

In the present embodiment, the triggering operation on a physical key corresponds to different application operations under different interfaces of one application, that is to say the present embodiment may control different virtual buttons. Thus, various controls may be performed on an application by the physical key and the controls are more flexible and convenient.

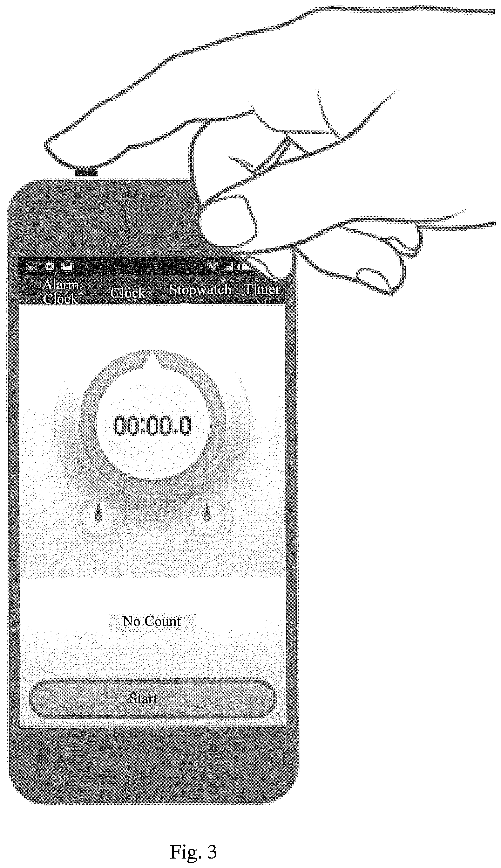

For example, under a home page of a stopwatch application, as shown in Fig. 3, the single pressing on the physical key corresponds to tapping the "Start" button. A user may start the stopwatch application and press the physical key. After receiving the triggering operation on the physical key, the mobile terminal determines the current application and the interface of the current application. If the mobile terminal determines that the current application is the stopwatch application and the current interface is the home page, the mobile terminal inquires the correspondence between triggering operations on physical keys and application operations and then determines that the application operation is a single tap operation on the "Start" button. The mobile terminal performs the single tap operation on the "Start" button. Then, the stopwatch application starts time-counting. If the user presses the physical key under the time-counting page of the stopwatch application, the mobile terminal receives the triggering operation on the physical key, and determines the current application and the interface of the current application; if the mobile terminal determines that the current application is the stopwatch application and the current interface is a time-counting interface, the mobile terminal inquires the correspondence between triggering operations on physical keys and application operations, and determines that the application operation corresponds to a single tap operation on the "Stop" button. The mobile terminal performs the single tap operation on the "Stop" button, and then the stopwatch application stops time-counting.

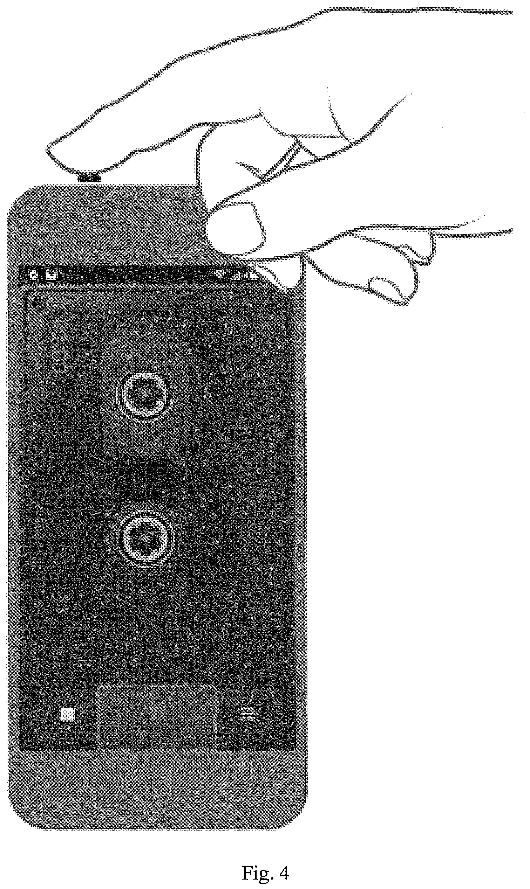

Taking a recording application as another example, under a home page of a recording application, as shown in Fig. 4, a single pressing on the physical key corresponds to a tap on the "Start" button. After a user presses the physical key, the recording application starts to record. Under a recording interface, a single pressing on the physical key corresponds to an application operation of pausing recording, equivalent to a tap on the "Pause" button. Two pressing on the physical key corresponds to an application operation of stopping recording, equivalent to a tap on the "Stop" button.

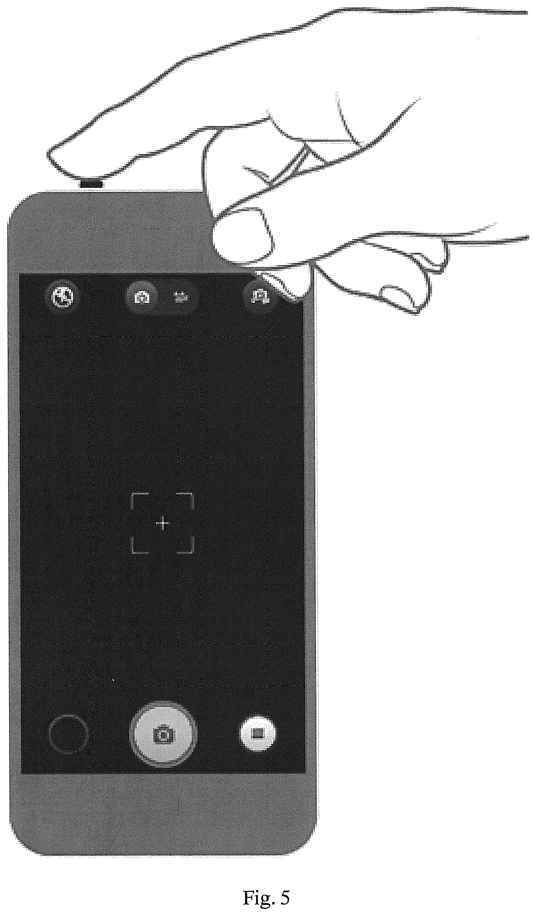

Taking a camera application as another example, under a home page of the camera application, as shown in Fig. 5, a single pressing on the physical key corresponds to a tap on the "Take a photo" button. After a user presses the physical key, the camera application starts to take photos, each pressing on the physical key takes a photo. A long pressing on the physical key corresponds to a long pressing on the "Take a photo" button. After the user long-presses the physical key, the camera application starts consecutive photographing to realize continuous picture-capture.

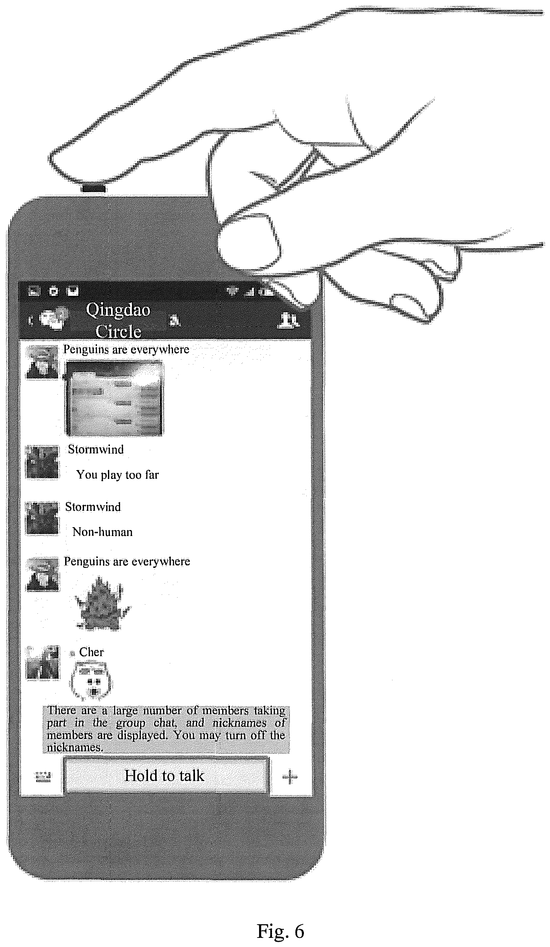

Taking an instant messaging application as an example, under a chatting interface of the instant messaging application, as shown in Fig. 6, a long pressing on the physical key corresponds to a long pressing on the "Hold to talk" button. After a user presses the physical key, the user may speak, and the mobile terminal performs recording. After the user releases the physical key, the mobile terminal stops recording and sends the recorded audio.

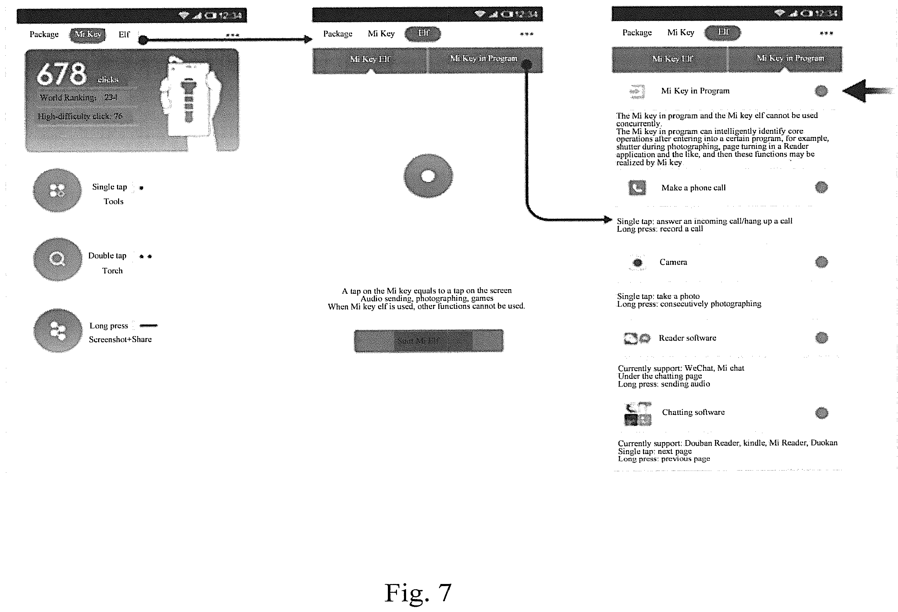

A user may configure triggering operations on physical keys and corresponding applications and corresponding application operations in advance. As shown in Fig. 7, the physical key is exemplified as an additional control key such as a Mi key.

Under a configuration interface of the Mi key, an "Elf" button is selected, and then a "Mi key in program" button is selected. Under a configuration interface of the "Mi key in program" button, whether the physical key is applied into the technical solution of the present embodiment may be selected. The applications which need to employ the technical solution in the embodiment may be selected.

In an embodiment, step A2 may be realized by steps A21 and A22.

In step A21, the current interface of the current application is obtained.

In step A22, a character or a pattern of the virtual button on the current interface is obtained, and the virtual button is identified.

In the embodiment, characters or patterns of virtual buttons on various interfaces of various applications are pre-stored, especially the characters or patterns of the virtual buttons which may be controlled by the physical key. After entering into an application applying the physical key, whether there is a pre-set virtual button on the application interface is determined. The virtual buttons may be identified by identifying manner for plug-ins, for example, "button" may be identified from the interface program. Or image identifying manner may be employed, the interface may be considered as an image (may be obtained by screenshot), and the image identifying may be performed to identify the characters or patterns of the virtual buttons. By the image identifying manner, it is not needed to be familiar with the program structures of applications and one of ordinary skill in this art only needs to know the interface pattern, and compatibility and extendibility are better.

In an embodiment, step 102 may be realized by step B.

In step B, the application operation corresponding to the triggering operation on the physical key under the current interface of the current application is determined.

In the embodiment, the physical key may correspond to different application operations under different interfaces of one application. As shown in Figs. 3 and 4, in the stopwatch application, a single tap application operation may correspond to a "Start to count" button and a "Stop counting" button. In the recording application, a single tap application operation may correspond to a "Start to record" button and a "Stop recording" button. In the present embodiment, one triggering operation on the physical key may enable various application operations for one application, and the applications may be controlled more flexibly and conveniently.

In an embodiment, step 102 may be realized by step B1.

In step B1, according to a most frequently used application operation in history recordings of application operations under the current application, the application operation corresponding to the triggering operation on the physical key under the current application is determined.

In the present embodiment, when determining the application operation corresponding to the triggering operation on the physical key, on one hand the application operation may be determined according to pre-configurations as shown in Fig. 7, either system configurations or user configurations; on the other hand, the application operation may be determined according to identification and analyses on user's behaviors. For example, user application operations under the current application are recorded in advance as the history recordings of the applications operations. The user may perform various application operations under the current application, for example, the tap operations on buttons 1 to 3 under the current application. The correspondence between triggering operation on the physical key and application operation may be realized by different manners. In the embodiment, the triggering operation on the physical key corresponds to the most frequently used application operation, and user's behaviors may be analyzed intelligently so that the user may more conveniently use the physical key and the using of the physical key more complies with the customs of the user.

In an embodiment, the correspondence between triggering operations on physical keys and application operation varies, for example the correspondence C1 and the correspondence C2.

Correspondence C1: one triggering operation on the physical key corresponds to a plurality of application operations.

Taking a stopwatch application as an example, the physical key is configured in advance as corresponding to an application operation of 10-seconds countdown. Under the home page of the stopwatch application, if a user presses the physical key, the stopwatch application starts the 10-seconds countdown, equivalent to two application operations: setting a time period of 10 seconds and tapping to start countdown.

In the embodiment, a plurality of application operations may be realized by the physical key and the operations are more convenient and flexible.

Correspondence C2: triggering operations of a plurality of physical keys correspond to one application operation.

For example, a triggering operation of a single pressing on an additional control key concurrently with a single pressing on the home key corresponds to one application operation, for example, corresponding to taping the "Recording" button in the camera application.

In the embodiment, combinations of triggering operations on a plurality of physical keys are used to control application operations. Thus, control on more application operations are realized and control is more flexible and convenient.

The implementations for controlling an application will be described in detail by several embodiments.

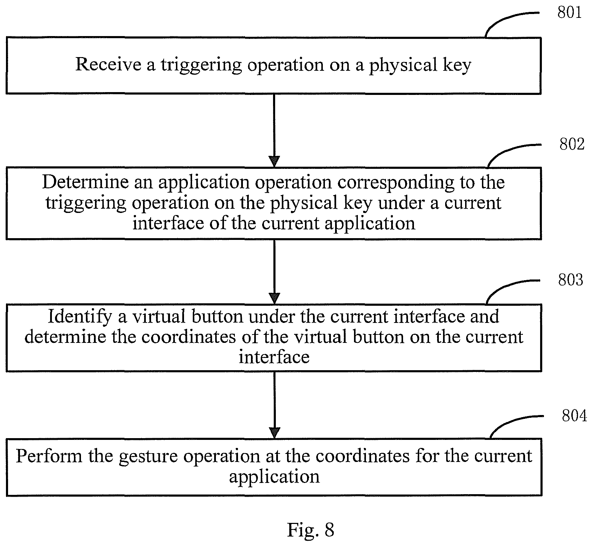

Fig. 8 is a flowchart showing a method for controlling an application according to an exemplary embodiment. As shown in Fig. 8, the method may be implemented by a mobile terminal and may include the following steps.

In step 801, a triggering operation on a physical key is received.

In step 802, an application operation corresponding to the triggering operation on the physical key under a current interface of the current application is determined.

In step 803, a virtual button is identified under the current interface and the coordinates of the virtual button on the current interface are determined.

In step 804, the gesture operation is performed at the coordinates for the current application.

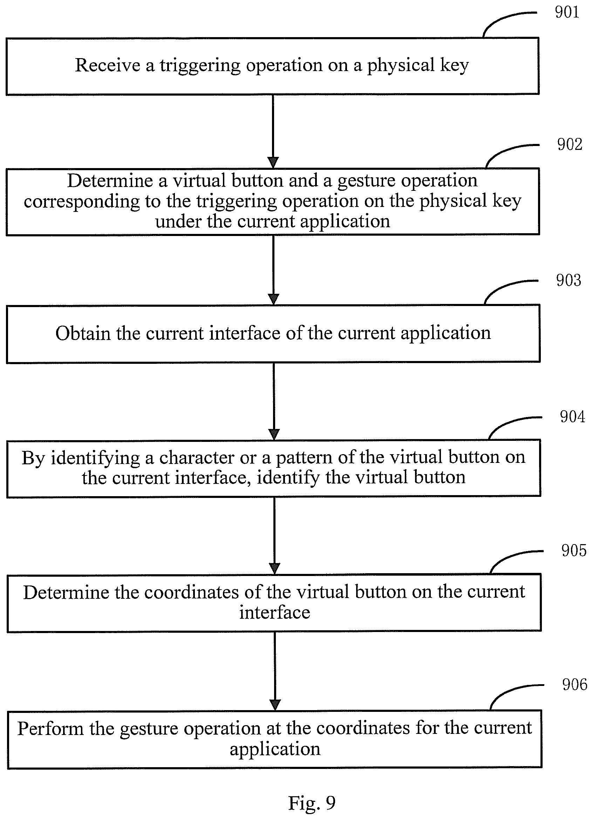

Fig. 9 is a flowchart showing a method for controlling an application according to an exemplary embodiment. As shown in Fig. 9, the method may be implemented by a mobile terminal and may include the following steps.

In step 901, a triggering operation on a physical key is received.

n step 902, a virtual button and a gesture operation corresponding to the triggering operation on the physical key under the current application are determined.

In step 903, the current interface of the current application is obtained.

In step 904, by identifying a character or a pattern of the virtual button on the current interface, the virtual button is identified.

In step 905, the coordinates of the virtual button on the current interface are determined.

In step 906, the gesture operation is performed at the coordinates for the current application.

The procedure for controlling an application shall be understood from the above description, and the procedure is performed by a mobile terminal and a computer. Descriptions are made with respect to the internal structures and functionalities of the two devices below.

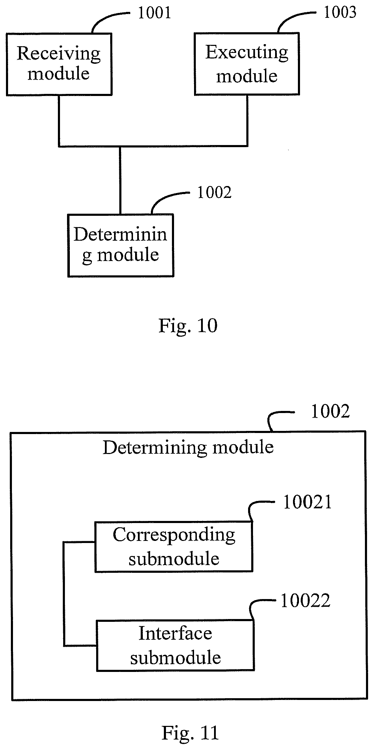

Fig. 10 is a block diagram showing a device for controlling an application according to an exemplary embodiment. As shown in Fig. 10, the device includes a receiving module 1001, a determining module 1002 and an executing module 1003.

The receiving module 1001 is configured to receive a triggering operation on a physical key.

The determining module 1002 is configured to determine an application operation corresponding to the triggering operation on the physical key under a current application.

The executing module 1003 is configured to perform the application operation for the current application.
In an embodiment, the application operation includes a gesture operation on a virtual button.

As shown in Fig. 11, the determining module 1002 includes a corresponding submodule 10021 and an interface submodule 10022.

The corresponding submodule 10021 is configured to determine a virtual button and a gesture operation corresponding to the triggering operation on the physical key under the current application.

The interface submodule 10022 is configured to identify the virtual button on a current interface, and determine coordinates of the virtual button on the current interface.

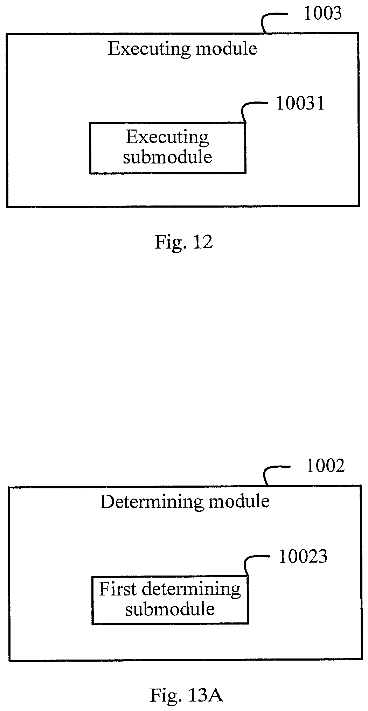

As shown in Fig. 12, the executing module 1003 includes an executing submodule 10031.

The executing submodule 10031 is configured to perform the gesture operation at the coordinates for the current application.

In an embodiment, the interface submodule 10022 obtains the current interface of the current application and, by identifying a character or a pattern of the virtual button on the current interface, identifies the virtual button.

In an embodiment, as shown in Fig. 13A, the determining module 1002 includes a first determining submodule 10023.

The first determining submodule 10023 is configured to determine an application operation corresponding to the triggering operation on the physical key under a current interface of the current application.

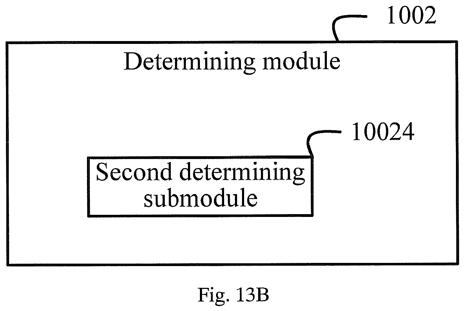

In an embodiment, as shown in Fig. 13B, the determining module 1002 includes a second determining submodule 10024.

The second determining submodule 10024 is configured to, according to a most frequently used application operation in history recordings of application operations under the current application, determine the application operation corresponding to the triggering operation on the physical key under the current application.

In an embodiment, one triggering operation on the physical key corresponds to a plurality of application operations; or
triggering operations on a plurality of physical keys correspond to one application operation.

With respect to the devices in the above embodiments, specific operations performed by respective modules have been described in detail in the embodiments of the methods and therefore repeated descriptions are omitted here.

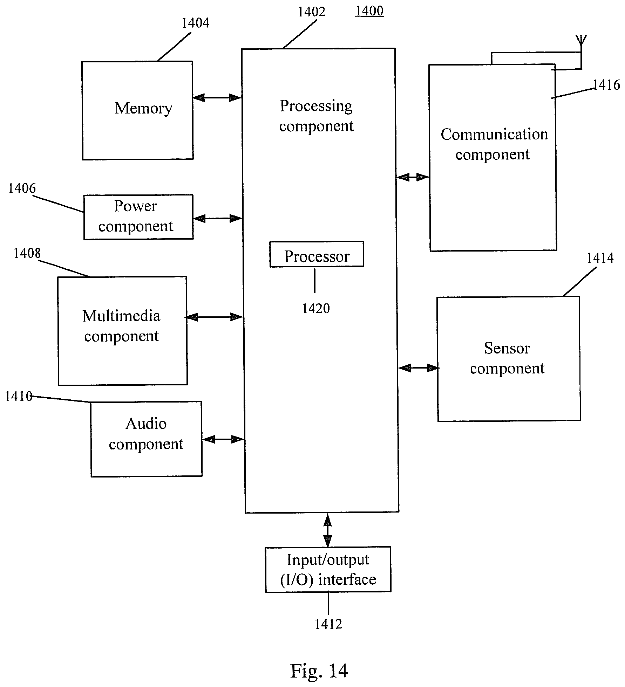

Fig. 14 is a block diagram of a device 1400 for controlling an application according to an exemplary embodiment. For example, the device 1400 may be a mobile phone, a computer, a digital broadcast terminal, a messaging device, a gaming console, a tablet, a medical device, exercise equipment, a personal digital assistant, and the like.

Referring to Fig. 14, the device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the device 1400. Examples of such data include instructions for any applications or methods operated on the device 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the device 1400. The power component 1406 may include a power management system, one or more power sources, and any other components associated with the generation, management, and distribution of power in the device 1400.

The multimedia component 1408 includes a screen providing an output interface between the device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and the rear camera may receive an external multimedia datum while the device 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the device 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide status assessments of various aspects of the device 1400. For instance, the sensor component 1414 may detect an open/closed status of the device 1400, relative positioning of components, e.g., the display and the keypad, of the device 1400, a change in position of the device 1400 or a component of the device 1400, a presence or absence of user contact with the device 1400, an orientation or an acceleration/deceleration of the device 1400, and a change in temperature of the device 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the device 1400 and other devices. The device 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1420 in the device 1400, for performing the above-described methods. For example, the non-transitory computer-readable storage medium may be a ROM, a RAM, a CD-ROM, a magnetic tape, a floppy disc, an optical data storage device, and the like.

Other embodiments of the present disclosure will be apparent to those skilled in the art from consideration of the specification and practice of the disclosure disclosed here. This application is intended to cover any variations, uses, or adaptations of the invention following the general principles thereof and including such departures from the present disclosure as come within known or customary practice in the art. It is intended that the specification and examples be considered as exemplary only, with the scope of the present disclosure being indicated by the following claims.

It will be appreciated that the present invention is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for controlling an application implemented by a mobile terminal, comprising:
receiving (101, 801, 901) a triggering operation on a physical key;
determining (102, 802, 902) an application operation corresponding to the triggering operation on the physical key under a current application; and
performing (103) the application operation for the current application;
the method being **characterized in that** the triggering operation on the physical key corresponds to different application operations under different interfaces of an application and the triggering operation on the physical key is configured by a user in advance;
and **in that** the application operation comprises a gesture operation on a virtual button, the determining (102) an application operation corresponding to the triggering operation on the physical key under a current application comprises:
determining (A1) a virtual button and a gesture operation corresponding to the triggering operation on the physical key under the current application; and
identifying (A2) the virtual button on a current application interface, and determining coordinates of the virtual button on the current application interface;
wherein the performing (103) the application operation for the current application comprises: performing (A3) the gesture operation at the coordinates for the current application.

2. The method for controlling an application according to claim 1, wherein the identifying (A2) the virtual button on a current application interface, comprises:
obtaining (A21) the current interface of the current application; and
by identifying a character or a pattern of the virtual button on the current interface, identifying (A22) the virtual button.

3. The method for controlling an application according to claim 1, wherein the determining (102) an application operation corresponding to the triggering operation on the physical key under a current application, comprises:
determining (B) an application operation corresponding to the triggering operation on the physical key under a current interface of the current application.

4. The method for controlling an application according to claim 1, wherein the determining (102) an application operation corresponding to the triggering operation on the physical key under a current application, comprises:
according to a most frequently used application operation in history recordings of application operations under the current application, determining (B1) the application operation corresponding to the triggering operation on the physical key under the current application.

5. The method for controlling an application according to claim 1, wherein one triggering operation on the physical key corresponds to a plurality of application operations; or
wherein triggering operations on a plurality of physical keys correspond to one application operation.

6. A device for controlling an application, comprising:
a receiving module (1001) configured to receive a triggering operation on a physical key;
a determining module (1002) configured to determine an application operation corresponding to the triggering operation on the physical key under a current application; and
an executing module (1003) configured to perform the application operation for the current application;
the device being **characterized in that** the triggering operation on the physical key corresponds to different application operations under different interfaces of an application and the triggering operation on the physical key is configured by a user in advance;
and **in that** the application operation comprises a gesture operation on a virtual button;
wherein the determining module (1002) comprises:
a corresponding submodule (10021) configured to determine a virtual button and a gesture operation corresponding to the triggering operation on the physical key under the current application; and
an interface submodule (10022) configured to identify the virtual button on a current interface, and determine coordinates of the virtual button on the current interface;
wherein the executing module (1003) comprises:
an executing submodule (10031) configured to perform the gesture operation at the coordinates for the current application.

7. The device for controlling an application according to claim 6, wherein the interface submodule (10022) obtains the current interface of the current application and, by identifying a character or a pattern of the virtual button on the current interface, identifies the virtual button.

8. The device for controlling an application according to claim 6, wherein the determining module (1002) comprises:
a first determining submodule (10023) configured to determine an application operation corresponding to the triggering operation on the physical key under a current interface of the current application.

9. The device for controlling an application according to claim 6, wherein the determining module (1002) comprises:
a second determining submodule (10024) configured to, according to a most frequently used application operation in history recordings of application operations under the current application, determine the application operation corresponding to the triggering operation on the physical key under the current application.

10. The device for controlling an application according to claim 6, wherein one triggering operation on the physical key corresponds to a plurality of application operations; or
wherein triggering operations on a plurality of physical keys correspond to one application operation.

11. A program product having stored therein instructions that, when executed by one or more processors of a mobile terminal, causes the mobile terminal to perform a method according to any one of claims 1 to 5.

12. A computer program, which when executing on a processor, performs a method according to any one of claims 1 to 5.

## Patentansprüche

1. Verfahren zum Steuern einer von einem mobilen Endgerät implementierten Anwendung, umfassend:
Empfangen (101, 801, 901) eines auslösenden Vorgangs auf einer physischen Taste,
Bestimmen (102, 802, 902) eines Anwendungsvorgangs, der dem auslösenden Vorgang auf der physischen Taste unter einer aktuellen Anwendung entspricht, und
Durchführen (103) des Anwendungsvorgangs für die aktuelle Anwendung,
wobei das Verfahren **dadurch gekennzeichnet ist, dass** der auslösende Vorgang auf der physischen Taste verschiedenen Anwendungsvorgängen unter verschiedenen Schnittstellen einer Anwendung entspricht und der auslösende Vorgang auf der physischen Taste von einem Benutzer im Voraus konfiguriert wird,
und dass der Anwendungsvorgang einen Gestenvorgang auf einer virtuellen Schaltfläche umfasst, wobei das Bestimmen (102) eines Anwendungsvorgangs, der dem auslösenden Vorgang auf der physischen Taste unter einer aktuellen Anwendung umfasst:
Bestimmen (A1) einer virtuellen Schaltfläche und eines Gestenvorgangs, der dem auslösenden Vorgang auf der physischen Taste unter der aktuellen Anwendung entspricht, und
Identifizieren (A2) der virtuellen Schaltfläche auf einer aktuellen Anwendungsschnittstelle und Bestimmen der Koordinaten der virtuellen Schaltfläche auf der aktuellen Anwendungsschnittstelle,
wobei das Ausführen (103) des Anwendungsvorgangs für die aktuelle Anwendung umfasst: Ausführen (A3) des Gestenvorgangs an den Koordinaten für die aktuelle Anwendung.

2. Verfahren zur Steuerung einer Anwendung nach Anspruch 1, wobei das Identifizieren (A2) der virtuellen Schaltfläche auf einer aktuellen Anwendungsschnittstelle umfasst:
Erhalten (A21) der aktuellen Schnittstelle der aktuellen Anwendung und
Identifizieren (A22) der virtuellen Schaltfläche durch Identifizieren eines Zeichens oder eines Musters der virtuellen Schaltfläche auf der aktuellen Schnittstelle.

3. Verfahren zum Steuern einer Anwendung nach Anspruch 1, wobei das Bestimmen (102) eines Anwendungsvorgangs, der dem auslösenden Vorgang auf der physischen Taste unter einer aktuellen Anwendung entspricht, umfasst:
Bestimmen (B) eines Anwendungsvorgangs, der dem auslösenden Vorgang auf der physischen Taste unter einer aktuellen Schnittstelle der aktuellen Anwendung entspricht.

4. Verfahren zum Steuern einer Anwendung nach Anspruch 1, wobei das Bestimmen (102) eines Anwendungsvorgangs, der dem auslösenden Vorgang auf der physischen Taste unter einer aktuellen Anwendung entspricht, umfasst:
Bestimme (B1) des Anwendungsvorgangs, der dem auslösenden Vorgang auf der physischen Taste unter der aktuellen Anwendung entspricht, entsprechend eines am häufigsten verwendeten Anwendungsvorgangs in den Historienaufzeichnungen von Anwendungsvorgängen unter der aktuellen Anwendung.

5. Verfahren zum Steuern einer Anwendung nach Anspruch 1, wobei ein auslösender Vorgang auf der physischen Taste einer Vielzahl von Anwendungsvorgängen entspricht, oder
wobei auslösende Vorgänge auf einer Vielzahl von physischen Tasten einem Anwendungsvorgang entsprechen.

6. Vorrichtung zum Steuern einer Anwendung, umfassend:
ein Empfangsmodul (1001), das dazu konfiguriert ist, einen auslösenden Vorgang auf einer physischen Taste zu empfangen,
ein Bestimmungsmodul (1002), das dazu konfiguriert ist, einen Anwendungsvorgang zu bestimmen, der dem auslösenden Vorgang auf der physischen Taste unter einer aktuellen Anwendung entspricht, und
ein Ausführungsmodul (1003), das dazu konfiguriert ist, den Anwendungsvorgang für die aktuelle Anwendung auszuführen,
wobei die Vorrichtung **dadurch gekennzeichnet ist, dass** der Auslösevorgang auf der physischen Taste verschiedenen Anwendungsvorgängen unter verschiedenen Schnittstellen einer Anwendung entspricht und der Auslösevorgang auf der physischen Taste von einem Benutzer im Voraus konfiguriert wird,
und dass der Anwendungsvorgang einen Gestenvorgang auf einer virtuellen Schaltfläche umfasst,
wobei das Bestimmungsmodul (1002) umfasst:
ein entsprechendes Untermodul (10021), das dazu konfiguriert ist, eine virtuelle Schaltfläche und einen Gestenvorgang zu bestimmen, der dem auslösenden Vorgang auf der physischen Taste unter der aktuellen Anwendung entspricht, und
ein Schnittstellenuntermodul (10022), das dazu konfiguriert ist, die virtuelle Schaltfläche auf einer aktuellen Schnittstelle zu identifizieren und Koordinaten der virtuellen Schaltfläche auf der aktuellen Schnittstelle zu bestimmen,
wobei das Ausführungsmodul (1003) umfasst:
ein Ausführungsuntermodul (10031), das dazu konfiguriert ist, den Gestenvorgang an den Koordinaten für die aktuelle Anwendung auszuführen.

7. Vorrichtung zum Steuern einer Anwendung nach Anspruch 6, wobei das Schnittstellenuntermodul (10022) die aktuelle Schnittstelle der aktuellen Anwendung erhält und durch Identifizieren eines Zeichens oder eines Musters der virtuellen Schaltfläche auf der aktuellen Schnittstelle die virtuelle Schaltfläche identifiziert.

8. Vorrichtung zum Steuern einer Anwendung nach Anspruch 6, wobei das Bestimmungsmodul (1002) umfasst:
ein erstes Bestimmungsuntermodul (10023), das dazu konfiguriert ist, einen Anwendungsvorgang zu bestimmen, der dem auslösenden Vorgang auf der physischen Taste unter einer aktuellen Schnittstelle der aktuellen Anwendung entspricht.

9. Vorrichtung zum Steuern einer Anwendung nach Anspruch 6, wobei das Bestimmungsmodul (1002) umfasst:
ein zweites Bestimmungsuntermodul (10024), das dazu konfiguriert ist, entsprechend einem am häufigsten verwendeten Anwendungsvorgang in den Historienaufzeichnungen von Anwendungsvorgängen unter der aktuellen Anwendung den Anwendungsvorgang zu bestimmen, der dem auslösenden Vorgang auf der physischen Taste unter der aktuellen Anwendung entspricht.

10. Vorrichtung zum Steuern einer Anwendung nach Anspruch 6, wobei ein Auslösevorgang auf der physischen Taste einer Vielzahl von Anwendungsvorgängen entspricht, oder
wobei die Auslösevorgänge auf einer Vielzahl von physischen Tasten einem Anwendungsvorgangs entsprechen.

11. Programmprodukt mit darin gespeicherten Befehlen, die, wenn sie von einem oder mehreren Prozessoren eines mobilen Endgerätes ausgeführt werden, das mobile Endgerät veranlassen, ein Verfahren nach einem der Ansprüche 1 bis 5 auszuführen.

12. Computerprogramm, das bei der Ausführung auf einem Prozessor ein Verfahren nach einem der Ansprüche 1 bis 5 ausführt.

## Revendications

1. Procédé de commande d'une application mis en œuvre par un terminal mobile, comprenant :
la réception (101, 801, 901) d'une opération de déclenchement sur une touche physique ;
la détermination (102, 802, 902) d'une opération d'application correspondant à l'opération de déclenchement sur la touche physique dans le cadre d'une application actuelle ; et
la réalisation (103) de l'opération d'application pour l'application actuelle ;
le procédé étant **caractérisé en ce que** l'opération de déclenchement sur la touche physique correspond à différentes opérations d'application dans le cadre de différentes interfaces d'une application et l'opération de déclenchement sur la touche physique est configurée par un utilisateur à l'avance ;
et **en ce que** l'opération d'application comprend une opération gestuelle sur un bouton virtuel, la détermination (102) d'une opération d'application correspondant à l'opération de déclenchement sur la touche physique dans le cadre d'une application actuelle comprend :
la détermination (A1) d'un bouton virtuel et d'une opération gestuelle correspondant à l'opération de déclenchement sur la touche physique dans le cadre de l'application actuelle ; et
l'identification (A2) du bouton virtuel sur une interface d'application actuelle, et la détermination des coordonnées du bouton virtuel sur l'interface d'application actuelle ;
dans lequel la réalisation (103) de l'opération d'application pour l'application actuelle comprend : la réalisation (A3) de l'opération gestuelle aux coordonnées pour l'application actuelle.

2. Procédé de commande d'une application selon la revendication 1, dans lequel l'identification (A2) du bouton virtuel sur une interface d'application actuelle comprend :
l'obtention (A21) de l'interface actuelle de l'application actuelle ; et
par l'identification d'un caractère ou d'une forme du bouton virtuel sur l'interface actuelle, l'identification (A22) du bouton virtuel.

3. Procédé de commande d'une application selon la revendication 1, dans lequel la détermination (102) d'une opération d'application correspondant à l'opération de déclenchement sur la touche physique dans le cadre d'une application actuelle comprend :
la détermination (B) d'une opération d'application correspondant à l'opération de déclenchement sur la touche physique dans le cadre d'une interface actuelle de l'application actuelle.

4. Procédé de commande d'une application selon la revendication 1, dans lequel la détermination (102) d'une opération d'application correspondant à l'opération de déclenchement sur la touche physique dans le cadre d'une application actuelle comprend :
selon une opération d'application la plus fréquemment utilisée dans des enregistrements d'historique d'opérations d'application dans le cadre de l'application actuelle, la détermination (B1) de l'opération d'application correspondant à l'opération de déclenchement sur la touche physique dans le cadre de l'application actuelle.

5. Procédé de commande d'une application selon la revendication 1, dans lequel une opération de déclenchement sur la touche physique correspond à une pluralité d'opérations d'application ; ou
dans lequel des opérations de déclenchement sur une pluralité de touches physiques correspondent à une opération d'application.

6. Dispositif de commande d'une application, comprenant :
un module de réception (1001) configuré pour recevoir une opération de déclenchement sur une touche physique ;
un module de détermination (1002) configuré pour déterminer une opération d'application correspondant à l'opération de déclenchement sur la touche physique dans le cadre d'une application actuelle ; et
un module d'exécution (1003) configuré pour réaliser l'opération d'application pour l'application actuelle ;
le dispositif étant **caractérisé en ce que** l'opération de déclenchement sur la touche physique correspond à différentes opérations d'application dans le cadre de différentes interfaces d'une application et l'opération de déclenchement sur la touche physique est configurée par un utilisateur à l'avance ;
et **en ce que** l'opération d'application comprend une opération gestuelle sur un bouton virtuel ;
dans lequel le module de détermination (1002) comprend :
un sous-module correspondant (10021) configuré pour déterminer un bouton virtuel et une opération gestuelle correspondant à l'opération de déclenchement sur la touche physique dans le cadre de l'application actuelle ; et
un sous-module d'interface (10022) configuré pour identifier le bouton virtuel sur une interface actuelle, et déterminer les coordonnées du bouton virtuel sur l'interface actuelle ;
dans lequel le module d'exécution (1003) comprend :
un sous-module d'exécution (10031) configuré pour réaliser l'opération gestuelle aux coordonnées pour l'application actuelle.

7. Dispositif de commande d'une application selon la revendication 6, dans lequel le sous-module d'interface (10022) obtient l'interface actuelle de l'application actuelle et, par l'identification d'un caractère ou d'une forme du bouton virtuel sur l'interface actuelle, identifie le bouton virtuel.

8. Dispositif de commande d'une application selon la revendication 6, dans lequel le module de détermination (1002) comprend :
un premier sous-module de détermination (10023) configuré pour déterminer une opération d'application correspondant à l'opération de déclenchement sur la touche physique dans le cadre d'une interface actuelle de l'application actuelle.

9. Dispositif de commande d'une application selon la revendication 6, dans lequel le module de détermination (1002) comprend :
un second sous-module de détermination (10024) configuré pour, selon une opération d'application la plus fréquemment utilisée dans des enregistrements d'historique d'opérations d'application dans le cadre de l'application actuelle, déterminer l'opération d'application correspondant à l'opération de déclenchement sur la touche physique dans le cadre de l'application actuelle.

10. Dispositif de commande d'une application selon la revendication 6, dans lequel une opération de déclenchement sur la touche physique correspond à une pluralité d'opérations d'application ; ou dans lequel des opérations de déclenchement sur une pluralité de touches physiques correspondent à une opération d'application.

11. Produit programme ayant des instructions stockées en son sein qui, lorsqu'il est exécuté par un ou plusieurs processeurs d'un terminal électronique, amène le terminal mobile à réaliser un procédé selon l'une quelconque des revendications 1 à 5.

12. Programme d'ordinateur, qui lorsqu'il s'exécute sur un processeur, réalise un procédé selon l'une quelconque des revendications 1 à 5.
